# EUROPEAN PATENT SPECIFICATION

(11) **EP 2 654 324 B1**
(45) Date of publication and mention of the grant of the patent: **15.06.2016**
(21) Application number: 11848492.2
(22) Date of filing: 15.12.2011
(51) Int. Cl.: H04W 4/02, H04W 88/02, H04L 29/08

(54) **METHOD FOR GUIDING LOCATION, MACHINE-READABLE SAVING MEDIUM, AND MOBILE COMMUNICATION TERMINAL**
POSITIONSLEITUNGSVERFAHREN, MASCHINENLESBARES SPEICHERMEDIUM UND MOBILES KOMMUNIKATIONSENDGERÄT
PROCÉDÉ DE GUIDAGE DE POSITION, SUPPORT DE STOCKAGE LISIBLE PAR MACHINE ET TERMINAL DE COMMUNICATION MOBILE

(30) Priority: 15.12.2010 KR 20100128133
(43) Date of publication of application: 23.10.2013
(73) Proprietor: Samsung Electronics Co., Ltd., Suwon-si, Gyeonggi-do, 443-742 (KR)
(72) Inventor: PARK, Chan-Ho, Seoul 136-724 (KR)
(74) Representative: Gover, Richard Paul
(86) International application number: PCT/KR2011/009682
(87) International publication number: WO 2012/081919

(56) References cited:
- KR-A- 20070 112 910
- KR-A- 20080 029 036
- KR-A- 20090 058 117
- US-A1- 2009 005 018
- US-A1- 2009 181 699
- US-A1- 2009 325 603
- US-A1- 2010 029 302

## Description

### Technical Field

The present invention relates generally to a method of guiding a position, and more particularly, to a method of guiding a position using portable terminals such as a mobile phone, a PDA, a laptop computer, a tablet PC and the like.

### Background Art

Mobile devices are currently becoming daily necessities. It is difficult to think of a day in which there is no mobile phone corresponding to a representative example of the mobile device. Further, with the current development of communication technologies of the mobile devices, the mobile devices support additional functions such as a digital camera function, a multimedia recording/reproducing function, a Digital Multimedia Broadcasting (DMB) function, a financial settlement function, an Internet search function, an electronic notebook function, a wireless data communication function and the like.

In addition, in the mobile devices, the support of a navigation function using a Global Positioning System (GPS) is currently generalized more and more, and a lot of navigation programs have been developed and installed in "smart phones".

However, a navigation device is restricted to operate only for "roads" on the Road Traffic Act. Accordingly, the guiding for a general sidewalk is difficult. Further, while the navigation device is useful for a general person who rapidly reacts to information, a more intuitive positing guiding method is required for a person who is visually impaired, an old person, or a person who has a slower auditory response speed in comparison with the general person. In addition, a method of intuitively acquiring assistance from another person by using a smart phone when receiving position guiding is required. However, fundamental solutions of the above problems have not been yet proposed.

US-2010/0029302-A1 describes device-to-device location awareness. During a wireless call communication session between two mobile devices, a local device responds to a user activation by automatically sending a message to the remote device. The message requests location information of the remote device. Upon obtaining location information from the remote device, a location of the remote device is automatically displayed on the local device.

US-2009/0005018-A1 describes route sharing and location. A first device can transmit data related to a route to a second device. The route data can be a route map displayed on a touch display of the second device. A route engine can determine whether the second device is at a location defined by a route locus based on the route data and location data of the second device. The route engine can provide an indication at the first device for a route location of the second device based on the determination. The provided indication can be a route map. The route map can include the route location of the second device, directions to the route location, and an estimated travel time to the route location.

US-2009/0325603-A1 describes location sharing. Geographic location data is send from a first device to a second device with a modified message to signal the presence of geographic location data associated with the message.

### Disclosure

### Technical Problem

The present invention has been made to solve the above mentioned problems and provides a more intuitive position guiding method using a mobile phone.

### Technical solution

In accordance with a first aspect of the present invention, a method of guiding a position is provided. The method comprises: initiating phone communication between a first terminal and a second terminal; requesting position information from the second terminal, by the first terminal; receiving the position information of the second terminal and displaying, on a geographic information map, the position information in the first terminal; and transmitting guiding information to the second terminal, by the first terminal; wherein transmitting the guiding information comprises receiving, on a touch panel of the first terminal, a touch input of a user in a direction on the geographic information map, and switching the touch input to the guiding information.

In accordance with a second aspect of the present invention, a first terminal for guiding a position is provided. The first terminal comprises: a touch panel, a storage unit, and a controller. The storage unit is configured to store a geographic information map. The controller is configured to: initiate phone communication between the first terminal and a second terminal; request position information from the second terminal; receive the position information of the second terminal and display, on the geographic information map, the position information in the first terminal; receive, on the touch panel, a touch input of a user in a direction on the geographic information map; switch the touch input to guiding information; and transmit the guiding information to the second terminal.

Also disclosed is a method of guiding a position. The method includes initiating phone communication between a first terminal and a second terminal; making a request for collecting position information to the second terminal, by the first terminal; receiving the position information of the second terminal and displaying a geographic information map including the position information in the first terminal; and transmitting guiding information included in the geographic information map to the second terminal, by a user of the first terminal.

The position information of the second terminal may be displayed in the first terminal in real time. The position information may be identically displayed in both the first terminal and the second terminal.

A position information collecting menu may be activated in a screen unit of the first terminal when the phone communication is initiated. In a step of making the request for collecting the position information by the user of the first terminal, a request menu screen may be generated in a screen unit of the second terminal. The request menu screen may include an acceptance menu and a rejection menu. When a user of the second terminal selects the acceptance menu, a GPS sensor of the second terminal may be turned on and the first terminal may collect current position information of the user of the second terminal.

The collected current position of the user of the second terminal may be displayed on the screen unit of the first terminal or the second terminal, and may be displayed on a geographic information map since the screen unit may display the geographic information map.

The terminal may further include a touch panel formed on the screen unit. The user of the first terminal may perform a touch input on a part of the screen unit displaying the geographic information map. The touch input may include a front direction, a rear direction, a left direction, and a right direction, and may be converted to direction data to be transmitted in real time to the second terminal. The direction data may be displayed in a figure type including an arrow on the screen unit. The direction data may further include distance information in proportion to a length during which a touch is maintained when the touch input is made in the first terminal.

The geographic information map may further include scale information, and the distance information may be converted to an actual distance according to the scale information and displayed in the screen unit of the second terminal.

A sensor unit may further include a compass sensor. When the second terminal is located in front of the user of the second terminal, the sensor unit may determine a direction in which the second terminal is located with respect to the user of the second terminal is a front direction. In a step of displaying front direction information in the first terminal, the front direction information may be transmitted to the second terminal.

### Advantageous Effects

According to the present invention, a communication participant of one side can guide a position of a communication participant of the other side while identifying in real time position information of the communication participant of the other side, and thus can intuitively and conveniently guide the position. Further, as the position guiding is visually performed, a terminal can be more conveniently used. In addition, the communication participant of one side can identify a gaze direction of the communication participant of the other side, and thus can more accurately guide the position.

### Brief Description of the Drawings

The foregoing and other objects, features and advantages of the present invention will become more apparent from the following detailed description when taken in conjunction with the accompanying drawings in which:
FIG. 1 is a diagram schematically illustrating a terminal according to an embodiment of the present invention.
FIG. 2 is a flowchart illustrating a position guiding method according to an embodiment of the present invention.
FIG. 3 is a diagram schematically illustrating a position guiding method according to another embodiment of the present invention; and
FIG. 4 is a diagram schematically illustrating a position guiding method according to another embodiment of the present invention.

### Best Mode

### Mode for Invention

The present invention may have various modifications and embodiments and thus will be described with reference to specific embodiments in detail. However, the present invention is not limited to the specific embodiments but should be construed as including all modifications, equivalents, and substitutes within the scope of the present invention.

While terms including ordinal numbers, such as "first" and "second," etc., may be used to describe various components, such components are not limited by the above terms. The above terms are used only to distinguish one component from another. For example, a first component may be referred to as a second component without departing from the scope of the present invention, and likewise a second component may be referred to as a first component. The term of and/or encompasses a combination of plural items or any one of the plural items.

In the case where a component is referred to as being "connected" or "accessed" to other component, it should be understood that not only the component is directly connected or accessed to the other component, but also there may exist another component between them. Meanwhile, in the case where a component is referred to as being "directly connected" or "directly accessed" to other component, it should be understood that there is no component therebetween.

The terms used herein are merely used to describe specific embodiments, and are not intended to limit the present invention. An expression used in the singular encompasses the expression of the plural, unless it has a clearly different meaning in the context. The terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

Unless defined otherwise, all terms used herein have the same meaning as commonly understood by those of skill in the art. Such terms as those defined in a generally used dictionary are to be interpreted to have the meanings equal to the contextual meanings in the relevant field of art, and are not to be interpreted to have ideal or excessively formal meanings unless clearly defined in the present specification.

First, a terminal according to the present embodiment includes a screen unit for displaying an image, a storage unit for storing a geographic information map, a sensor unit including a GPS sensor, a controller corresponding to a central processing unit, and a wireless communication module (that is, wireless communication unit).

Hereinafter, the present invention and exemplary embodiments of the present invention will be described in detail with reference to the accompanying drawings.

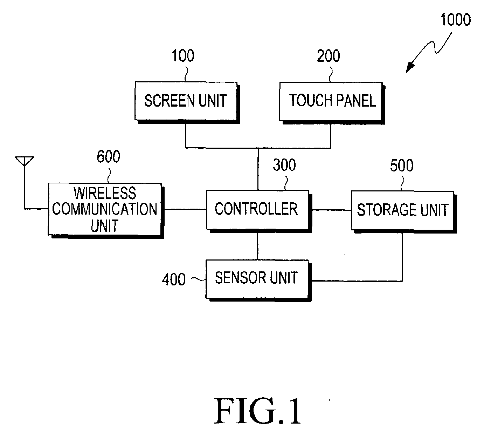

FIG. 1 is a diagram schematically illustrating a terminal according to an embodiment of the present invention. Referring to FIG. 1, a terminal 1000 according to an embodiment of the present invention includes a screen unit 100, a touch panel 200, a controller 300, a sensor unit 400, a storage unit500, and a wireless communication unit 600.

The screen unit 100 displays an image and includes one of a Plasma Display Panel (PDP), a Liquid Crystal Display (LCD), an Organic Light Emitting Diode (OLED), and a Cathode Ray Tube (CRT).

The touch panel 200 is disposed on the screen unit 100. When a user touches various menu screens displayed on the screen unit 100, a particular command can be performed. The touch panel 200 may be implemented in any type such as a resistive type, a capacitive type, a ultrasonic type, an infrared ray type, an optical type, or a bending wave type. The touch panel 200 is disposed on a front surface of the terminal 1000, and the screen unit 100 is disposed below the touch panel 200. A user interface displayed by the screen unit 100 is shown to the user through the transparent touch panel 200.

The controller 300 controls general operations of the terminal 1000 as a central processing unit, and the terminal 1000 according to an embodiment of the present invention serves to perform a position guiding method.

The sensor unit 400 is a sensor for detecting a position, a direction, and a motion of the terminal 1000 and includes at least one of an acceleration sensor, a gravity sensor, an impact sensor, a GPS, and a compass sensor.

The storage unit 500 stores a geographic information map, an operating system of the terminal 1000, various applications, information input to the terminal 1000, information generated within the terminal 1000 and the like.

The wireless communication unit 600 wirelessly transmits data from the controller 300 or receives a wireless signal from the air.

A more detailed structure of the terminal will be omitted since it can be easily implemented by those skilled in the art.

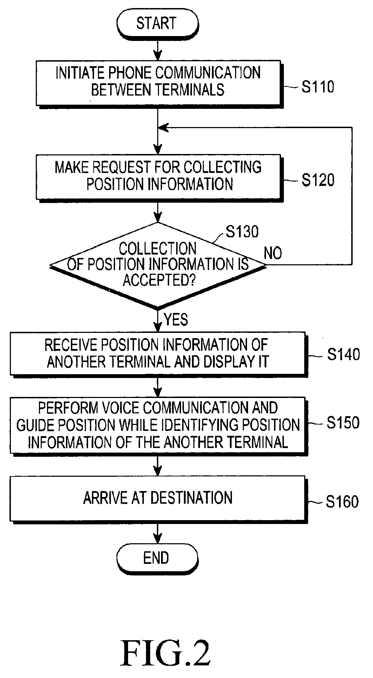

FIG. 2 is a flowchart illustrating a position guiding method according to an embodiment of the present invention. Referring to FIG. 2, a position guiding method according to an embodiment of the present invention includes a first step S110 to a sixth step S160.

In the first step S110, phone communication between a first terminal and a second terminal is initiated. Transmission of a call message to initiate the phone communication is performed by one of the first and second terminals, and each of the first and second terminals may have the configuration as shown in FIG. 1.

In a second step S120, the first terminal makes a request for collecting position information to the second terminal. The request for collecting the position information is manually performed by a user of the first terminal or automatically performed through a prearranged setting of the user, a currently executed phone communication application, or a default setting by a separate guiding application.

In a third step S130, the second terminal or a user of the second terminal determines whether to accept the collection of the position information according to the request for collecting the position information. In a case of the acceptance, the second terminal performs a fourth step S140. In a case of the rejection, the second terminal repeatedly performs the second step S120 or ends the position guiding method and informs the user of the first terminal that the collection of the position information has failed.

In the fourth step S140, the first terminal receives position information of the second terminal according to the acceptance of the collection of the position information and displays the received position information for the user of the first terminal.

In a fifth step S150, the user of the first terminal identifies the transmitted position information of the second terminal, transmits guiding information for a destination to the second terminal, and communicates with the user of the second terminal. In the fourth and fifth steps S140 and S150, the collection of the position information and the transmission of the guiding information may be performed aperiodically (for example, when the guiding information is input), in real time, or repeatedly.

In the sixth step S160, when the user of the second terminal arrives at the destination, the collection of the position information and the transmission of the guiding information end. The ending of the collection and transmission may be achieved by a request of the user (for example, a command for ending the guiding application or the like).

According to the method, it is possible to guide the position while both the terminals identify the position information. Hereinafter, the above steps will be described in more detail.

At this time, in the fourth step S140, the position information of the second terminal is displayed in real time in the first terminal. That is, since the position information is shared in real time, the guiding is possible and an error margin of the guiding can be minimized. Further, the same position information of the second terminal may be displayed in the first terminal. Even though geographic information maps used by the first terminal and the second terminal are different, the first terminal loads the same coordinate value to the geographic information map to display a current position of the user of the second terminal, so that the same position information may be displayed. Further, the first terminal can transmit its own position information to the second terminal, and current positions of the first and second terminals may be simultaneously displayed on one of the geographic information maps. Moreover, the first and second terminals receive the geographic information map from a sever to share the same geographic information map. In addition, the first terminal having received the position information of the second terminal may transmit the geographic information map including the current position of the second terminal (and the first terminal) and guiding information to the second terminal.

Next, in step S110, when the phone communication is initiated, a position information collecting menu is activated and displayed in the screen unit of the first terminal. In step S120, when the user of the first terminal selects the position information collecting menu by using the touch panel or the like, the first terminal transmits a position information collection request message to the second terminal according to a request of the user. In step S130, a request menu screen for making a request for accepting the collection of the position information is generated in the screen unit of the second terminal. When the user of the second terminal selects an acceptance menu from the request menu screen, the second terminal transmits a position information collection acceptance message to the first terminal according to a request of the user. Meanwhile, the request menu screen may display an "acceptance" menu and a "rejection" menu, which prevents personal information from being leaked which can cause unfair transmission of the position information.

At this time, when the user of the second terminal selects the "acceptance" menu, a GPS sensor of the second terminal is turned on and collects the position information of the user of the second terminal. The turning on of the GPS sensor is to prevent the GPS sensor from being driven all the time and thus to optimize power consumption. Each of steps S120 and S130 may be automatically performed by a prearranged setting of the user of the terminal or a default setting by a currently executed application.

Next, when the acceptance of the position information is completed, the current position of the user of the first terminal is displayed in the first terminal or the second terminal, and preferably in the screen units of both the terminals. Accordingly, the user of the first terminal can guide a movement position of the user of the second terminal while viewing the screen unit. In this case, the user of the first terminal can guide the movement position with a voice while performing phone communication.

Meanwhile, in this case, the aforementioned geographic information map also may be displayed on the screen units of the first terminal and the second terminal. Accordingly, the user of the first terminal can share the position information of the user of the second terminal through the map.

Hereinafter, a position guiding method according to another embodiment of the present invention will be described. The present embodiment describes only different matters from the previous embodiment. The remaining configurations are the same as those of the previous embodiment.

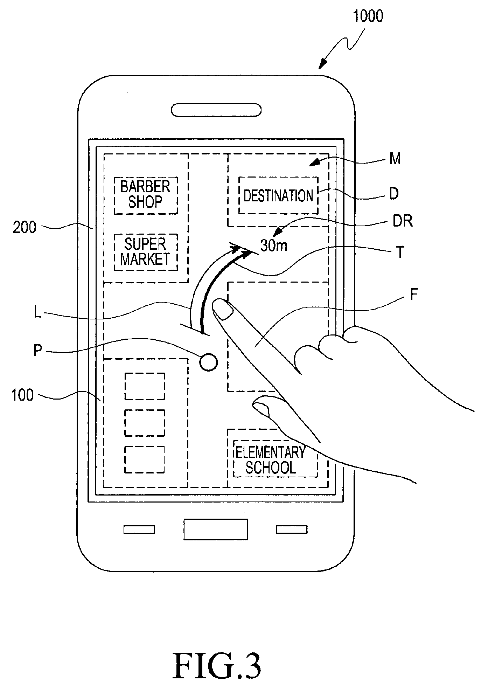

FIG. 3 is a diagram schematically illustrating a position guiding method according to another embodiment of the present invention. FIG. 3 schematically illustrates that the first terminal 1000 including the touch panel 200 disposed on the screen unit is controlled by the user of the first terminal, and more specifically, by a finger F of the user.

As illustrated in FIG. 3, a current position P of the user of the second terminal is displayed on the screen unit 100. Further, a destination D is displayed in an upper right side of the current position P. As described above, the screen unit 100 may further display the current position of the user of the first terminal, and the destination D may be, for example, the current position of the user of the first terminal.

Accordingly, the user of the first terminal can touch the touch panel 200 in a direction indicated by a reference numeral T on a geographic information map M by using the finger F. Such a touch input may be switched to direction data (that is, guiding information), transmitted to the second terminal, and then displayed on the screen unit of the second terminal as a figure including an arrow in the same direction. The transmission of the data is performed through the wireless communication unit 600. At this time, since the touch input may be performed in a front direction, a rear direction, a right direction, and a left direction, the input can be made in all directions. Accordingly, the user of the second terminal visually receives the guiding of the direction in which the user will move.

Meanwhile, when the user of the first terminal performs the touch input, the touch input may be made to form a predetermined length. That is, as illustrated in FIG. 3, the user of the first terminal can make the input to form a predetermined length L while maintaining the touch with the touch panel 200 in performing the touch input. At this time, the geographic information map M includes scale information, so that the predetermined length L may be converted to actual distance information through an operation by the controller. Accordingly, distance information DR may be displayed on the screen unit of the second terminal in detail.

Although the distance information DR is displayed on the screen unit 100 of the first terminal 1000 in FIG. 3, the user of the second terminal has only to receive the guiding according to the distance information and the distance information may not be displayed in the first terminal.

As described above, since the direction actually touched by the person who performs the guiding is transmitted to the person who receives the guiding together with actual distance information, more intuitive guiding is possible.

Hereinafter, a position guiding method according to another embodiment of the present invention will be described. The present embodiment describes only different matters from the previous embodiments. The remaining configurations are the same as those of the previous embodiments.

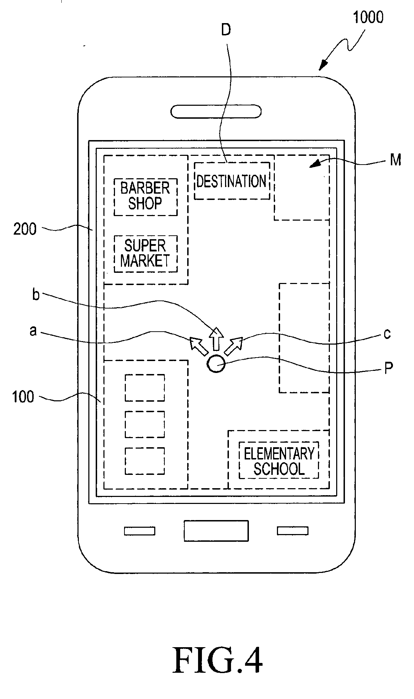

FIG. 4 is a diagram schematically illustrating a position guiding method according to another embodiment of the present invention. In FIG. 4, the user of the first terminal identifies a forward facing direction of the user of the second terminal.

The sensor unit of the terminal may further include a compass sensor. Since the compass sensor determines due north, due south, due east, and due west directions, when the terminal is located approximately facing the user, the terminal can determine the forward facing direction of the user.

That is, when the user of the second terminal faces forward in an a, b, or c direction, the user of the first terminal also can visually identify the a, b, or c direction as illustrated in FIG. 4. For example, when a facing direction of the user of the second terminal is "a", the user of the first terminal can guide the user of the second terminal to rotate by 45 degrees in a right direction. Further, when the facing direction of the user of the second terminal is "c", the user of the first terminal can guide the user of the second terminal to arrive at the destination D by rotating by 45 degrees in a left direction and then going straight.

Although the present invention has been described with reference to exemplary embodiments of the present invention, the present invention is not limited thereto. The present invention can be modified and implemented in various forms without departing from the scope of the claims, detailed descriptions, and accompanying drawings and the modification and implementation are included in the scope of the present invention.

It may be appreciated that the embodiments of the present invention can be implemented in software, hardware, or a combination thereof. Any such software may be stored, for example, in a volatile or nonvolatile storage device such as a ROM, a memory such as a RAM, a memory chip, a memory device, or a memory IC, or a recordable optical or magnetic medium such as a CD, a DVD, a magnetic disk, or a magnetic tape, regardless of its ability to be erased or its ability to be re-recorded. It can be also appreciated that the memory included in the mobile terminal is one example of machine-readable devices suitable for storing a program including instructions that are executed by a processor device to thereby implement embodiments of the present invention. Therefore, embodiments of the present invention provide a program including codes for implementing a system or method claimed in any claim of the accompanying claims and a machine-readable device for storing such a program. Further, this program may be electronically conveyed through any medium such as a communication signal transferred via a wired or wireless connection, and embodiments of the present invention appropriately include equivalents thereto.

While the present invention has been shown and described with reference to certain embodiments thereof, it will be understood by those skilled in the art that various changes in form and details may be made therein without departing from the scope of the present invention as defined by the appended claims.

### Industrial Applicability

The present invention is applied to a method of guiding a position of a portable communication terminal such as a mobile phone, a PDA, a laptop computer, a tablet PC or the like.

## Claims

1. A method of guiding a position, the method comprising:
initiating (S110) phone communication between a first terminal and a second terminal;
requesting (S120) position information from the second terminal, by the first terminal;
receiving (S140) the position information of the second terminal and displaying, on a geographic information map, the position information in the first terminal; and
transmitting (S150) guiding information to the second terminal, by the first terminal;
said method being **characterised in that** transmitting guiding information comprises:
receiving, on a touch panel of the first terminal, a touch input of the user of the first terminal, made in a direction indicated on the geographic information map; and
switching the touch input to direction data providing guiding information to the second terminal.

2. The method of claim 1, wherein the position information of the second terminal is displayed in the first terminal in real time.

3. The method of claim 1 or 2, wherein the position information is identically displayed in both the first terminal and the second terminal.

4. The method of any one of claims 1 to 3, further comprising activating a position information collecting menu in a screen unit of the first terminal when the phone communication is initiated.

5. The method of any one of claims 1 to 4, wherein the guiding information includes distance information in proportion to a length during which a touch input is maintained when the user of the first terminal performs the touch input.

6. The method of any one of claims 1 to 5, wherein the position information of the second terminal includes information on a direction at which a user of the second terminal currently faces, and the guiding information includes information on a direction at which the user of the second terminal will face.

7. A machine-readable storage medium recording a program for executing the method of one of claims 1 to 6.

8. A portable communication terminal comprising the machine-readable storage medium of claim 7.

9. A first terminal for guiding a position, the first terminal comprising:
a touch panel;
a storage unit configured to store a geographic information map; and
a controller configured to:
initiate phone communication between the first terminal and a second terminal (1000);
request position information from the second terminal (1000);
receive the position information of the second terminal and display, on the geographic information map, the position information in the first terminal;
receive, on the touch panel, a touch input of the user of the first terminal, made in a direction indicated on the geographic information map;
switch the touch input to direction data providing guiding information to the second terminal; and
transmit the guiding information to the second terminal (1000).

10. The first terminal of claim 9, wherein the guiding information is displayed in real time in the second terminal (1000).

11. The first terminal of claim 9 or 10, wherein a request menu screen is displayed in a screen unit (100) according to the request.

12. The first terminal of claim 11, wherein the request menu screen includes an acceptance menu and a rejection menu, and when a user of the portable communication terminal (1000) selects the acceptance menu, a GPS sensor of the the portable communication terminal (1000) is turned on and current position information of the portable communication terminal (1000) is transmitted to the first terminal.

13. The first terminal of any one of claims 9 to 12, wherein the guiding information includes distance information, and the distance information is converted to an actual distance according to scale information of the geographic information map and displayed in the screen unit (100).

## Patentansprüche

1. Verfahren zum Leiten einer Position, wobei das Verfahren Folgendes beinhaltet:
Einleiten (S110) einer Telefonkommunikation zwischen einem ersten Endgerät und einem zweiten Endgerät;
Anfordern (S120) von Positionsinformationen von dem zweiten Endgerät durch das erste Endgerät;
Empfangen (S140) der Positionsinformationen des zweiten Endgeräts und Anzeigen, auf einer geografischen Informationskarte, der Positionsinformationen in dem ersten Endgerät; und
Senden (S150) von Leitinformationen zum zweiten Endgerät durch das erste Endgerät;
wobei das genannte Verfahren **dadurch gekennzeichnet ist, dass** das Senden von Leitinformationen Folgendes beinhaltet:
Empfangen, auf einem Touchpanel des ersten Endgeräts, einer Berührungseingabe des Benutzers des ersten Endgeräts, gemacht in einer Richtung, die auf der geografischen Informationskarte angezeigt wird; und
Schalten der Berührungseingabe auf Richtungsdaten, die dem zweiten Endgerät Leitinformationen bereitstellen.

2. Verfahren nach Anspruch 1, wobei die Positionsinformationen des zweiten Endgeräts in Echtzeit auf dem ersten Endgerät angezeigt werden.

3. Verfahren nach Anspruch 1 oder 2, wobei die Positionsinformationen auf dem ersten Endgerät und dem zweiten Endgerät identisch angezeigt werden.

4. Verfahren nach einem der Ansprüche 1 bis 3, das ferner das Aktivieren eines Positionsinformationssammelmenüs in einer Bildschirmeinheit des ersten Endgeräts beinhaltet, wenn die Telefonkommunikation eingeleitet wird.

5. Verfahren nach einem der Ansprüche 1 bis 4, wobei die Leitinformationen Distanzinformationen proportional zu einer Länge beinhalten, während der eine Berührungseingabe aufrechterhalten wird, wenn der Benutzer des ersten Endgeräts die Berührungseingabe durchführt.

6. Verfahren nach einem der Ansprüche 1 bis 5, wobei die Positionsinformationen des zweiten Endgeräts Informationen über eine Richtung beinhalten, der ein Benutzer des zweiten Endgeräts gerade zugewandt ist, und die Leitinformationen Informationen über eine Richtung beinhalten, der der Benutzer des zweiten Endgeräts zugewandt ist.

7. Maschinenlesbares Speichermedium zum Aufzeichnen eines Programms zum Ausführen des Verfahrens nach einem der Ansprüche 1 bis 6.

8. Tragbares Kommunikationsendgerät, das das maschinenlesbare Speichermedium von Anspruch 7 umfasst.

9. Erstes Endgerät zum Leiten einer Position, wobei das erste Endgerät Folgendes umfasst:
ein Touchpanel;
eine Speichereinheit, konfiguriert zum Speichern einer geografischen Informationskarte; und
einen Controller, konfiguriert zum:
Einleiten einer Telefonkommunikation zwischen dem ersten Endgerät und einem zweiten Endgerät (1000);
Anfordern von Positionsinformationen von dem zweiten Endgerät (1000);
Empfangen der Positionsinformationen des zweiten Endgeräts und Anzeigen, auf der geografischen Informationskarte, der Positionsinformationen auf dem ersten Endgerät;
Empfangen, auf dem Touchpanel, einer Berührungseingabe des Benutzers des ersten Endgeräts, gemacht in einer Richtung, die auf der geografischen Informationskarte angezeigt wird;
Schalten der Berührungseingabe auf Richtungsdaten, die dem zweiten Endgerät Leitinformationen bereitstellen; und
Senden der Leitinformationen zum zweiten Endgerät (1000).

10. Erstes Endgerät nach Anspruch 9, wobei die Leitinformationen in Echtzeit auf dem zweiten Endgerät (1000) angezeigt werden.

11. Erstes Endgerät nach Anspruch 9 oder 10, wobei ein Anforderungsmenübildschirm auf einer Bildschirmeinheit (100) gemäß der Anforderung angezeigt wird.

12. Erstes Endgerät nach Anspruch 11, wobei der Anforderungsmenübildschirm ein Zustimmungsmenü und ein Rückweisungsmenü beinhaltet, und wenn ein Benutzer des tragbaren Kommunikationsendgeräts (1000) das Zustimmungsmenü wählt, ein GPS-Sensor des tragbaren Kommunikationsgeräts (1000) eingeschaltet wird und aktuelle Positionsinformationen des tragbaren Kommunikationsendgeräts (1000) zum ersten Endgerät gesendet werden.

13. Erstes Endgerät nach einem der Ansprüche 9 bis 12, wobei die Leitinformationen Distanzinformationen beinhalten und die Distanzinformationen in eine tatsächliche Distanz gemäß Maßstabsinformationen der geografischen Informationskarte umgewandelt und auf der Bildschirmeinheit (100) angezeigt werden.

## Revendications

1. Procédé de guidage de position, le procédé comprenant les opérations consistant à :
lancer (S110) une communication téléphonique entre un premier terminal et un deuxième terminal ;
faire demander (S120), par le premier terminal, des informations de position auprès du deuxième terminal ;
recevoir (S 140) les informations de position du deuxième terminal et afficher, sur une carte d'informations géographiques, les informations de position dans le premier terminal ; et
faire transmettre (S 150), par le premier terminal, des informations de guidage au deuxième terminal ;
ledit procédé étant **caractérisé en ce que** la transmission d'informations de guidage comprend les opérations consistant à :
recevoir, sur un panneau tactile du premier terminal, une saisie tactile de l'utilisateur du premier terminal, faite dans une direction indiquée sur la carte d'informations géographiques ; et
commuter la saisie tactile vers des données de direction fournissant des informations de guidage au deuxième terminal.

2. Procédé selon la revendication 1, les informations de position du deuxième terminal étant affichées dans le premier terminal en temps réel.

3. Procédé selon la revendication 1 ou 2, les informations de position étant affichées de façon identique à la fois dans le premier terminal et le deuxième terminal.

4. Procédé selon l'une quelconque des revendications 1 à 3, comprenant en outre l'activation d'un menu de collecte d'informations de position dans une unité de visualisation du premier terminal lorsque la communication téléphonique est lancée.

5. Procédé selon l'une quelconque des revendications 1 à 4, les informations de guidage incluant des informations de distance en proportion à une longueur durant laquelle une saisie tactile est maintenue lorsque l'utilisateur du premier terminal effectue la saisie tactile.

6. Procédé selon l'une quelconque des revendications 1 à 5, les informations de position du deuxième terminal incluant des informations au sujet d'une direction vers laquelle un utilisateur du deuxième terminal fait actuellement face, et les informations de guidage incluant des informations au sujet d'une direction vers laquelle l'utilisateur du deuxième terminal va faire face.

7. Support de stockage lisible par machine enregistrant un programme en vue de l'exécution du procédé selon l'une quelconque des revendications 1 à 6.

8. Terminal de communications portable comprenant le support de stockage lisible par machine selon la revendication 7.

9. Premier terminal pour le guidage de position, le premier terminal comprenant :
un panneau tactile ;
une unité de stockage configurée de façon à stocker une carte d'informations géographiques ; et
un contrôleur configuré pour :
lancer une communication téléphonique entre le premier terminal et un deuxième terminal (1000) ;
demander des informations de position auprès du deuxième terminal (1000) ;
recevoir les informations de position du deuxième terminal et afficher, sur la carte d'informations géographiques, les informations de position dans le premier terminal ;
recevoir, sur le panneau tactile, une saisie tactile de l'utilisateur du premier terminal, faite dans une direction indiquée sur la carte d'informations géographiques ;
commuter la saisie tactile vers des données de direction fournissant des informations de guidage au deuxième terminal ; et
transmettre les informations de guidage au deuxième terminal (1000).

10. Premier terminal selon la revendication 9, les informations de guidage étant affichées en temps réel dans le deuxième terminal (1000).

11. Premier terminal selon la revendication 9 ou 10, un écran de menu de demande étant affiché dans une unité de visualisation (100) conformément à la demande.

12. Premier terminal selon la revendication 11, l'écran du menu de demande incluant un menu d'acceptation et un menu de refus, et lorsqu'un utilisateur du terminal de communications portable (1000) sélectionne le menu d'acceptation, un capteur GPS du terminal de communications portable (1000) est activé et des informations de position actuelles du terminal de communications portable (1000) sont transmises au premier terminal.

13. Premier terminal selon l'une quelconque des revendications 9 à 12, les informations de guidage incluant des informations de distance, et les informations de distance étant converties en une distance réelle en fonction des informations d'échelle de la carte d'informations géographiques et affichées dans l'unité de visualisation (100).
